# EUROPÄISCHE PATENTANMELDUNG

(11) **EP 2 975 729 A1**
(43) Veröffentlichungstag der Anmeldung: **20.01.2016**
(21) Anmeldenummer: 14177450.5
(22) Anmeldetag: 17.07.2014
(51) Int. Cl.: H02K 1/16, H02K 1/18, H02K 1/20, H02K 7/18, H02K 9/04, H02K 5/20, H02K 9/14

(54) **Generator einer Windkraftanlage**

(71) Anmelder: Siemens Aktiengesellschaft, 80333 München (DE)
(72) Erfinder: Hartmann, Ulrich, 14197 Berlin (DE)

(57) **Zusammenfassung**

Die Erfindung betrifft einen Generator einer Windkraftanlage, mit einem Stator (2), der aus geschichteten Blechen aufgebaut ist und im wesentlichen axial verlaufende Nuten aufweist, die zu einem Rotor weisen, wobei auf der den Nuten gegenüberliegenden Seite des Stators (2), also am Blechrücken, Tragelemente (3), insbesondere U-förmige Tragelemente vorgesehen sind, die den Blechrücken des Stators (2) von einer Tragstruktur (4) beabstanden, wobei die Tragelemente (3) Kräfte des Generators an die Tragstruktur (4) weiterleiten.

## Beschreibung

Die Erfindung betrifft einen Generator einer Windkraftanlage.

Generatoren, insbesondere von Windkraftanlagen erzeugen bei der Wandlung von mechanischer in elektrischer Energie Verlustwärme. Die dabei anfallende Wärmemenge muss zur Vermeidung von thermischer Überlastung, insbesondere des Wicklungssystems, aus dem Generator mit Hilfe eines Kühlmittels, z.B. Luft oder Wasser abgeführt werden. Bei der Wandlung von mechanischer in elektrische Energie sind die dafür erforderlichen elektrischen aktiven Bauteile, wie beispielsweise die Elektrobleche, die Spulen, das Isolationsmaterial, zusätzlich hohen mechanischen Kräften ausgesetzt.

Um ein Versagen der elektrisch aktiven Bauteile aufgrund der mechanischen Kräfte zu vermeiden, werden die bei der Energiewandlung auftretenden Kräfte und Momente durch eine Tragstruktur in ein Maschinenfundament abgeleitet.

Bei allgemein bekannten Ausführungen erfolgt die Wärmeabfuhr und die Ableitung der mechanischen Kräfte bei derartigen Generatoren unabhängig voneinander. Es existiert beispielsweise eine Tragstruktur, die mit dem Elektroblech auf der dem Luftspalt des Generators abgewandten Seite befestigt ist, um die auftretenden Kräfte und die Momente aus den elektrischen Aktivteilen in das Maschinenfundament abzuleiten. Ergänzend dazu ist eine eigene Luftführungsstruktur vorgesehen, die die Luft gezielt durch den Generator lenkt, um die anfallende Wärme abzuführen.

Nachteilig dabei ist, dass sowohl für die Wärmeabfuhr als auch für die Ableitung der mechanischen Kräfte Vorrichtungen vorzusehen sind, die den Generator unnötig verteuern und/oder aufwändige konstruktive Ausgestaltungen erfordern.

Ausgehend davon liegt der Erfindung die Aufgabe zugrunde, einen Generator zu schaffen, der bei einem einfachen Aufbau eine erfolgreiche Ableitung von Wärme und der auftretenden mechanischen Kräfte gewährleistet.

Die Lösung der gestellten Aufgabe gelingt durch einen Generator einer Windkraftanlage mit einem Stator oder Statorsegment, der/das aus geschichteten Blechen aufgebaut ist und im wesentlichen axial verlaufende Nuten aufweist, die zu einem Rotor weisen, wobei auf der den Nuten gegenüberliegenden Seite des Stators bzw. Statorsegments, also am Jochrücken, Tragelemente, insbesondere U-förmige Tragelemente vorgesehen sind, die den Jochrücken des Stators bzw. Statorsegments von einer Tragstruktur beabstanden, wobei die Tragelemente Kräfte des Generators an die Tragstruktur weiterleiten.

Durch die Integration dieser beider Funktionalitäten in ein Bauelement reduziert sich der Fertigungsaufwand erheblich, die Platzverhältnisse im Generatorinnern werden übersichtlicher gestaltet, was auch die Luftführung und damit die Kühlung des Generators vereinfacht.

In einer Ausführung werden dabei die Tragelemente zwischen Jochrücken des Blechpakets des Stators bzw. Statorsegments und einer Tragstruktur so angeordnet, dass sich zumindest abschnittsweise freie Querschnitte dazwischen ergeben, durch die eine erzwungene Luftströmung geführt wird. Die Tragelemente können dabei als Kastenprofile ausgeführt sein. Sie können insbesondere und in vorteilhafter Weise auch als U-Profile eingesetzt werden, so dass sich der verfügbare Querschnitt für die Luftführung oder Strömungsgeschwindigkeit der Luft weiter erhöht, indem die Luft ergänzend oder ausschließlich zwischen den Schenkeln des U-Profils geführt wird.

In einer anderen Ausführungsform sind die Tragelemente zwischen Jochrücken des Blechpakets des Stators bzw. Statorsegments und einer Tragstruktur angeordnet, wobei sich zwischen den Tragelementen in Umfangsrichtung betrachtet keine oder Querschnitte einstellten, die durch Umfangrippen reduziert sind. Eine erzwungene Luftströmung stellt sich nunmehr zwischen den Schenkeln der U-Profile und/oder den reduzierten Querschnitten ein.

Die erzwungene Luftströmung und ein damit verbundener Luftmengenumsatz wird dabei grundsätzlich durch dementsprechende Lüfter gewährleistet, sodass der Generator eine Selbstkühlung und/oder eine Fremdkühlung aufweist.

In einer vorteilhaften Ausgestaltung werden radiale Kühlschlitze im Blechpaket des Stators, die in vorgebbaren axialen Abständen am Rücken des Statorblechpakets angeordnet sind vorzugsweise direkt mit einem mittels des U-Profils gebildeten Kühlkanals strömungstechnisch verbunden. Mit anderen Worten: die radial aus dem Stator bzw. Statorsegment ausströmende Kühlluft wird über geeignete Mittel strömungstechnisch auf die jeweiligen durch die dem Kühlschlitz zugewandten offenen U-Profile gebildeten Kühlkanäle gelenkt.

Durch die Verwendung einer Vielzahl von U-Profilen kann somit eine Vergleichmäßigung der Kühlung des Generators, als auch eine Reduktion der Druckverluste innerhalb der Luftführungsstrecke erreicht werden, bei gleichzeitiger Versteifung des Jochrückens des Stators.

Bei Ableitung der mechanischen Kräfte und Momente aus dem Blechpaket des Stators bzw. der Statorsegment ergibt sich bei der Verwendung von Kasten- oder auch U-Profilen der Vorteil, dass dieses Blechpaket mit seinem Rücken an mehreren Stellen mit dem Profil, beispielsweise durch Schweißen und/oder Schrauben verbunden wird, wodurch die mechanische Belastung pro Verbindungsstelle abnimmt.

In axialer Richtung kann vorteilhafterweise die Anordnung der Tragelemente so erfolgen, dass diese über den axialen Verlauf betrachtet einen unterbrochenen Verlauf der einzelnen Profile aufweisen, was zu einer verstärkten Verwirbelung der Luft und gleichzeitig zu einem erhöhten Wärmeaustausch mit dem Rücken des Stators oder den Statorsegmenten führt.

Durch die erfindungsgemäße Funktionsintegration von Kühlung und Tragstruktur wird die Anzahl der Bauteile eines Generators gesenkt, was insbesondere bei Generator von Windkraftanlagen vorteilhaft ist, da die Gondel einer Windkraftanlage gewichtsoptimiert ausgeführt werden soll.

Die Luftführung am Rücken des Blechpakets des Stators bzw. Statorsegmente wird komplett durch die Tragelemente und/oder die Tragstruktur übernommen. Zusätzliche Abdichtungen von luftführenden Kanälen, die im Nachgang am Statorblechpaket befestigt werden müssen, sind somit nicht erforderlich, da ev. vorhandene Spalte zwischen der Tragstruktur und dem Blech entweder beim Schweißen und/oder beim VPI-Tränken des Stators geschlossen werden.

Durch die Integration von Kühlelementen mit der Drehmomentenabstützung durch ein oder mehrere Tragelemente verringert sich der Platzbedarf im Innern des Generators, was sich vorteilhaft in Bezug auf die Zugänglichkeit für Wartungs- und Inspektionsarbeiten in der Gondel auswirkt.

Ein weiterer Vorteil ergibt sich dadurch, dass die Kühlluft wesentlich gleichmäßiger an die jeweiligen Aktivkomponenten des Stators geführt wird und der Luftmassenstrom pro Querschnitt somit geringer auszuführen ist als bei bisher bekannten Maschinen. Dadurch sinkt die Antriebsleistung des Kühlkreislaufs und das Temperaturniveau innerhalb des Generators vergleichmäßigt sich ohne hot-spots aufzuweisen, was zu einer verbesserten Ausnutzung des Generators führt.

Die Erfindung sowie weitere vorteilhafte Ausgestaltungen der Erfindung sind den folgenden Ausführungsbeispielen zu entnehmen; darin zeigen:
- FIG 1: einen Querschnitt eines Ständers eines Außenläufermotors,
- FIG 2: einen Querschnitt eines Ständers eines Innenläufermotors,
- FIG 3: eine Verteilung der Tragelemente;
- FIG 4: eine weitere Anordnung der Tragelemente.

Die folgenden Ausführungsbeispiele zeigen lediglich beispielhaft die einzelnen offenbarten Merkmale. Die einzelnen Merkmale der unterschiedlichen Ausführungsbeispiele können selbstverständlich auch kombiniert werden.

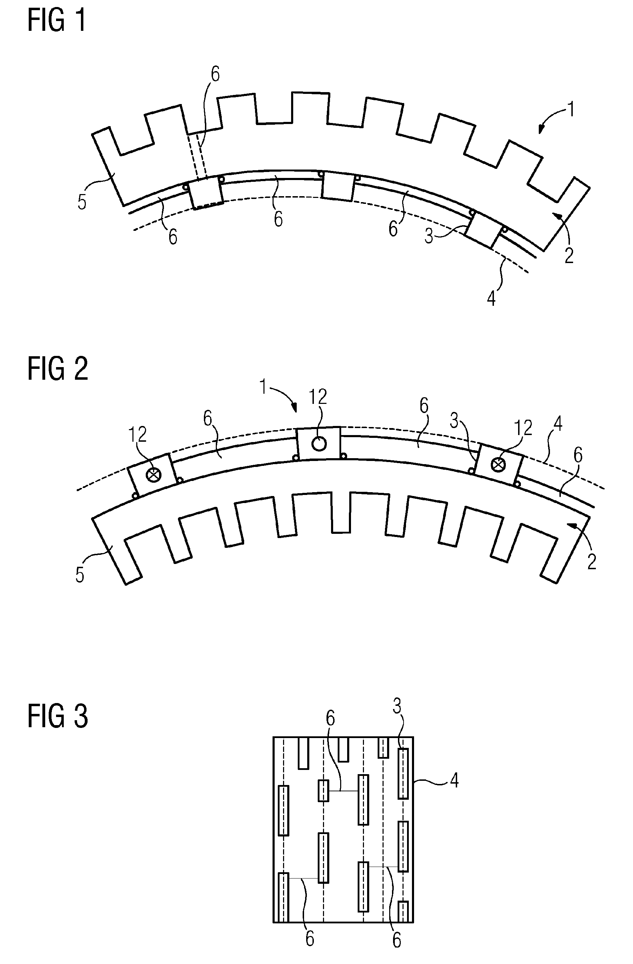

FIG 1 zeigt einen Ausschnitt eines Querschnitts eines Außenläufergenerators, wobei der Rotor aus zeichnerischen Gründen nicht näher dargestellt wurde. Ein Segment 1 dieses Generators einer Windkraftanlage weist einen Stator 2, der ohne Wicklung dargestellt ist, mit seinen Blechen 5 auf. Die Bleche 5 des Stators 2, in diesem Fall dieses Statorsegments 1, sind durch drei Tragelemente, die als U-Profile 3 ausgeführt sind auf einer Tragstruktur 4 des Stators 2 angeordnet. Eine Luftführung gestaltet sich nunmehr in Richtung der Blattebene oder aus der Blattebene heraus in einfacher Art und Weise durch die Kühlkanalgestaltung zwischen den Schenkel der U-Profile 3 und/oder zwischen den einzelnen U-Profilen 3.

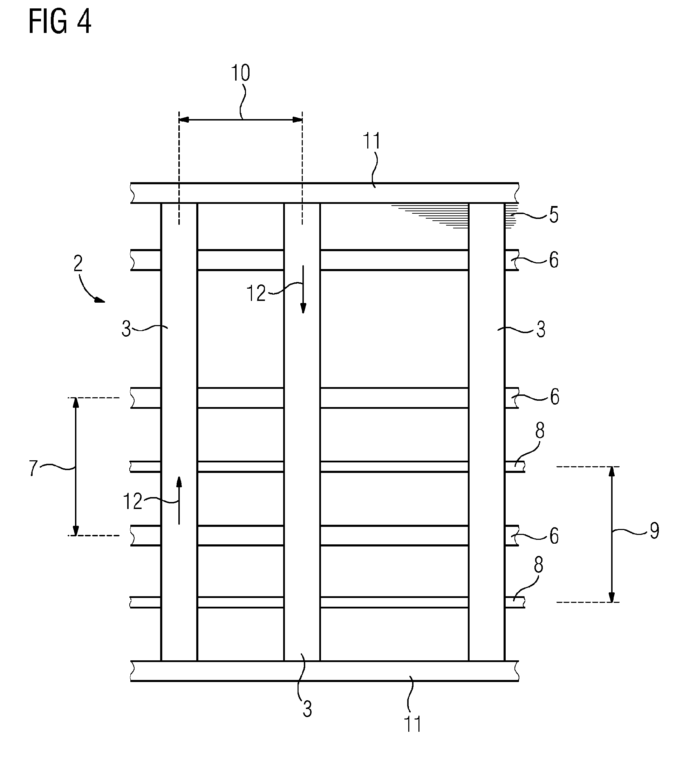

In vorteilhafter Weise weist der Stator 2 bzw. das Statorsegment 1 zusätzlich radiale Kühlschlitze auf (siehe auch FIG 4). Sie werden durch Abstandshalter gebildet, die zwischen axial geschichteten Blechen 5 angeordnet sind. Damit ergeben sich axiale und radiale Kühlluftströmungen, die zu einer Vergleichmäßigung der Temperaturen im Blechpaket des Stators 2 bzw. Statorsegments 1 führen.

FIG 2 zeigt einen Stator 2 eines Generators der segmentweise aufgebaut ist und dabei das Blechpaket aus jeweils segmentierten Blechen 5 in axialer Richtung angeordnet ist. Auch dabei wird der Rücken des Stators 2 mittels U-Profilen 3 an einer Tragstruktur 4 befestigt. Als Befestigungsarten sind dabei, wie auch in FIG 1, Schweiß- und Schraubverbindungen an den Enden der Schenkeln der U-Profile 3 mit dem Rücken des Stators 2 bzw. Statorsegments 1 vorgesehen.

FIG 3 zeigt in einem axialen Schnitt des Stators 2 bzw. Statorsegments 1, eine beispielhafte Anordnung von U-Profilen 3 im axialen Verlauf über den Rücken des Stators 2. Dabei beanspruchen die einzelnen U-Profile 3 nicht die ganze axiale Länge des Blechpakets des Stators 2. Dies verursacht turbulente Strömungen der Kühlluft am Jochrücken des Stators 2, was zu einer Verbesserung der Kühlung des Blechpakets des Stators 2 bzw. Statorsegments 1 führt.

Optional sind in FIG 1 bis 3 Umfangsrippen 6 gezeigt. Diese Umfangsrippen 6 die der Stabilisierung des Blechpaket dienen, können unterschiedliche radiale Höhen einnehmen. Sie können - wie in FIG 3 beispielhaft dargestellt - in Umfangsrichtung auch nur abschnittsweise eingesetzt werden. In Umfangsrichtung betrachtet sind die Umfangsrippen 6 an den jeweiligen U-Profilen bzw. Tragelemente 3 unterbrochen um den axialen Kühlluftstrom 12 nicht zu behindern.

FIG 4 zeigt in einer weiteren Ausführung den Ausschnitt eines Stators 2 in einer Ansicht des Jochrückens. Das Blechpaket wird dabei durch zwei Druckplatten 11 axial zusammengehalten. Am Umfang des Stators 2 bzw. des Statorsegments 1 sind die U-Profile 3 angeordnet. Diese Tragelemente können dabei in einem äquidistanten Abstand 10 in Umfangsrichtung betrachtet oder auch in unterschiedlichen Abständen voneinander angeordnet sein. In axialer Richtung betrachtet sind in vorgebbaren Abständen 9 radiale Kühlschlitze 8 angeordnet. In einer konkreten Ausführung weisen die zwischen den Kühlschlitzen 8 angeordneten Teilblechpakete, ca. 100 Bleche auf, wobei dieses Teilblechpaket dabei eine axiale Dicke von ca. 70 mm aufweist.

Des Weiteren sind in axial vorgebbaren Abständen 7 Umfangsrippen 6 angeordnet, die der Fixierung des Stators 2 in Umfangsrichtung und/oder einer Kühlmittelführung dienen. Die als U-Profile 3 ausgeführten Tragelemente führen einen Kühlluftstrom 12 in axialer Richtung. Um die Kühleffizienz zu steigern, sind Mittel vorgesehen, die einen in der Richtung abwechselnden Kühlluftstrom 12 vorsehen - wie dies auch in FIG 2 angedeutet ist. Für eine derartige Kühlmittelführung sind an den Stirnseiten des Stators 2 dementsprechende Umlenkelemente vorgesehen.

Die Kühlschlitze 8 sind dabei derart gestaltet, dass die Kühlluft in die durch die U-Profile 3 gebildeten Kanäle eintritt. Dies geschieht dadurch, dass die Kühlschlitze 8 im Bereich zwischen den U-Profilen 3 beispielsweise durch dementsprechende Stege abgedichtet werden. Eine andere Möglichkeit besteht darin, die Abstandshalter zwischen den Teilblechpaketen bereits derart zu gestalten, dass die radiale Kühlluft zumindest zum überwiegenden Teil in die durch die U-Profile axial gebildeten Kanäle gelenkt wird.

Der erfindungsgemäße Aufbau eignet sich selbstverständlich auch für andere dynamoelektrische Maschinen, wie größere Motoren ähnlicher Leistungsklasse (500 KW bis > 15 MW), die für Kompressorantriebe, Verdichter, Pumpen oder Mühlen eingesetzt werden.

## Patentansprüche

1. Generator einer Windkraftanlage, mit einem Stator (2) oder Statorsegment (1), der/das aus geschichteten Blechen (5) aufgebaut ist und im wesentlichen axial verlaufende Nuten aufweist, die zu einem Rotor weisen, wobei auf der den Nuten gegenüberliegenden Seite des Stators (2) bzw. Statorsegments (1), also am Jochrücken, Tragelemente (3), insbesondere U-förmige Tragelemente vorgesehen sind, die den Jochrücken des Stators (2) von einer Tragstruktur (4) beabstanden, wobei die Tragelemente (3) Kräfte des Generators an die Tragstruktur (4) weiterleiten.

2. Generator nach Anspruch 1, **dadurch gekennzeichnet, dass** die Tragelemente (3) mit der Tragstruktur (4) und dem Rücken des Blechpakets des Stators (2) bzw. Statorsegments (1) durch Schweiß- und/oder Schraubverbindungen verbunden sind.

3. Generator nach Anspruch 1 oder 2, **dadurch gekennzeichnet, dass** die Tragelemente (3) in Umfangsrichtung und/oder axialer Richtung auf dem Jochrücken des Stators (2) bzw. des Statorsegments (1) verteilt angeordnet sind.

4. Generator nach einem der vorhergehenden Ansprüche, **dadurch gekennzeichnet , dass** der Generator als Innen- oder Außenläufer ausgeführt ist.

5. Generator nach einem der vorhergehenden Ansprüche, **dadurch gekennzeichnet , dass** sich die U-Profile der Tragelemente (3) über die gesamte axiale Länge des Blechpakets des Stators (2) bzw. des Statorsegments (1) erstrecken.

6. Generator nach einem der Ansprüche 1 bis 4, **dadurch gekennzeichnet , dass** sich die U-Profile der Tragelemente (3) über eine vorgegebene Länge der axialen Länge des Blechpakets des Stators (2) bzw. des Statorsegments (1) erstrecken.

7. Windkraftanlage mit einem Generator nach einem der vorhergehenden Ansprüche.
